# FASCICULE DE BREVET EUROPEEN

(11) **EP 1 002 581 B1**
(45) Date de publication et mention de la délivrance du brevet: **20.07.2005**
(21) Numéro de dépôt: 99402670.6
(22) Date de dépôt: 25.10.1999
(51) Int. Cl.: B01J 38/30, B01J 20/34

(54) **Procédé de traitement d'un catalyseur ou d'un adsorbant en lit fluidise**
Verfahren zum Behandeln eines Katalysators oder eines Absorptionsmittel in einem Wirbelbett
Method for treating a catalyst or an absorbent in a fluidised bed

(30) Priorité: 20.10.1998 FR 9813182
(43) Date de publication de la demande: 24.05.2000
(73) Titulaire: EURECAT SA., 07800 La Voulte-sur-Rhône (FR)
(72) Inventeur: Dufresne, Pierre, 26000 Valance (FR); Darcissac, Jean, 07800 Saint Georges les Bains (FR)
(74) Mandataire: Benoist, François

(56) Documents cités:
- WO-A-92/01511
- WO-A-94/20213
- WO-A-97/39300
- US-A- 2 419 245
- US-A- 3 527 694
- US-A- 4 026 821
- US-A- 5 286 691

## Description

La présente invention concerne un procédé de mise en contact, avec agitation subséquente, d'une masse catalytique pulvérulente ou d'une masse d'un adsorbant pulvérulent (pulvérulent signifiant que la masse du solide est sous la forme de particules telle que poudre, grains extrudés, billes, dragées, pastilles, etc..), le procédé consistant à agiter le solide de façon particulière.

Ce procédé s'applique notamment au stripage (stripping) de particules que l'on cherche à séparer d'un effluent réactionnel ou à la régénération ou à l'activation ou à la réactivation ou à la réjuvénation d'un catalyseur ou d'un adsorbant.

Généralement pour ce type de traitement, le catalyseur ou l'adsorbant est agité ou brassé dans un four, notamment dans un four rotatif et par exemple de type four à louvres tel que décrit dans le brevet US-A-4,551,437 en présence des réactifs nécessaires à la régénération, activation, réactivation, réjuvénation, c'est à dire de l'air ou un gaz contenant de l'oxygène moléculaire dilués ou non par un gaz inerte tel quel qu'azote, ou tout gaz capable par exemple de brûler les contaminants soufrés et carbonés, et aux conditions opératoires nécessaires de température, pression, débits, etc, pour réaliser ce type de brûlage d'impuretés.

Il s'est avéré que pour réaliser ce type de régénération ou traitement similaire ou pour réaliser un stripage, il est avantageux d'opérer de façon à ce que le catalyseur ou l'adsorbant se trouve sous la forme d'un lit fluide ou fluidisé, car cette technologie permet d'excellents transferts de chaleur et de matière.

La technologie des lits fluides pour réaliser des conversions d'hydrocarbures est bien connue, par exemple ne serait ce que pour les craquages catalytiques ("Fluid Catalytic Cracking"). Ainsi divers brevets décrivent ces types d'agencement : WO 94-20213, WO 97-39300, US-A-4,925,632.

Le brevet US-3,527,694 décrit un système avec 2 solides (catalyseur-= 1^{er} solide et particules fines additionnées = 2^{ème} solide), le 2^{ème} solide représentant 5-40% volume du total des solides (colonne 2 lignes 58-59), soit un rapport pondéral décrit entre le 1^{er} et le 2ème solide de 1,5 à 13.

Le brevet US-5,286,691 décrit une régénération de catalyseur usé de FCC (1^{er} solide) en présence de particules d'additif (2^{ème} solide).

La taille des particules du 2^{ème} solide doit être supérieure d'au moins 50% à celle du 1^{er} solide (colonne 4, lignes 12-13).

La demande WO-92/01511 décrit une régénération de catalyseur usé de FCC (1^{er} solide). Ce catalyseur peut contenir des particules d'additifs pour augmenter les performances de la réaction. Aucune information n'est donnée quant à la taille et la quantité de ces particules.

L'invention concerne un procédé de mise en contact dans une enceinte d'un premier solide pulvérulent choisi dans le groupe constitué par les catalyseurs et les adsorbants avec un deuxième solide pulvérulent de granulométrie différente, généralement plus faible de celle du premier solide, en présence d'au moins un gaz.

Ce procédé avec mise en mouvement des dits solides, s'applique notamment au stripage de catalyseurs ou d'absorbants, ou la régénération de catalyseurs et d'adsorbants, ou à l'activation ou la réactivation ou la réjuvénation de catalyseurs ou d'adsorbants.

Dans ce procédé de mise en contact de particules d'un catalyseur ou d'un adsorbant avec des particules d'un autre solide pulvérulent, la dite mise en contact s'effectue dans une enceinte sous la forme d'un lit fluide au moyen d'un gaz de fluidisation, les particules du dit autre solide pulvérulent ayant une granulométrie différente de celle des particules du catalyseur ou de l'adsorbant.

L'invention concerne donc essentiellement la mise en contact, avec mouvement, de préférence en lit fluide ou fluidisé, de particules pulvérulentes d'au moins un premier solide choisi dans le groupe constitué par les catalyseurs et les adsorbants avec au moins des particules inertes d'un deuxième solide, dont la taille des particules (granulométrie) est suffisamment différente de celle du catalyseur ou de l'adsorbant, pour pouvoir séparer ensuite aisément les deux solides, notamment par tamisage, en présence d'un gaz capable d'assumer une fluidisation des deux solides, par exemple de l'air, un gaz inerte où tout gaz contenant de l'oxygène moléculaire.

Ce procédé peut être mis en oeuvre pour effectuer un strippage (ou "stripping") d'un catalyseur ou de tout solide en vue de séparer ce catalyseur ou ce solide de réactifs gazeux ou réactionnels avec lesquels il a été préalablement en contact. Au cours d'un stripage, on cherche par exemple à enlever les hydrocarbures encore présents sur le catalyseur, notamment à l'aide de tout gaz adéquat, par exemple de l'air (air chaud de préférence) ou sous l'action d'un gaz inerte, comme l'azote, ou sous l'action de vapeur d'eau ou de dioxyde de carbone. Ce procédé peut aussi être mis en oeuvre pour effectuer la régénération, ou réactivation, ou activation ou réjuvénation d'un catalyseur ou d'un adsorbant.

Le deuxième solide peut être, par exemple, de l'alumine, de la silice, de la magnésie, du sable, leurs mélanges, les poussières ou fines de ces catalyseurs. En général, la dimension des particules du deuxième solide est au maximum égale à la moitié de la plus petite dimension du premier solide.

L'enceinte dans laquelle est réalisée la mise en contact des deux solides et le gaz tel quel de l'air est toute enceinte adéquate dans laquelle on peut agiter des solides et des gaz. Avantageusement c'est un four fixe équipé à sa base d'un système de distribution de gaz apte à faire fluidiser un lit de particules solides.

Dans un aspect préféré de l'invention, le procédé consiste à introduire progressivement, périodiquement ou en continu en un point (par exemple à une extrémité) d'un four ou ensemble ou séparément, d'une part le dit premier solide (catalyseur ou adsorbant) et d'autre part le dit deuxième solide inerte, lesquels cheminent progressivement, c'est à dire de façon continue ou intermittente (périodiquement) vers l'autre extrémité du four. Les deux types de solides sont donc introduits dans l'enceinte, en continu ou en batch et de même cheminent à l'intérieur de l'enceinte progressivement, en continu ou périodiquement, jusqu'à un autre point du four (par exemple à son autre extrémité) d'où ils sont soutirés progressivement. En au moins un point du four et de préférence en plusieurs points de ce four on introduit au moins un gaz qui assure la fluidisation des solides. Le gaz qui passe au travers du lit catalytique possède deux fonctions : d'une part de fluidisation de ce lit afin d'assurer ainsi un bon transfert de chaleur et matière au sein du lit, d'autre part de réactif pour participer aux réactions qui sont cherchées dans l'application considérée.

Lorsque l'application est un stripage d'un solide contenant par exemple des hydrocarbures le gaz sera avantageusement de l'air à température modérée ou un gaz inerte comme de l'azote ou encore de la vapeur d'eau, ou enfin un mélange de ces gaz. Lorsque l'application est une régénération d'un solide contenant des dépôts carbonés et soufrés, le gaz devra être oxydant pour permettre des réactions de combustion et notamment contenir de l'oxygène. Les cinétiques des réactions d'élimination du carbone et du soufre sont contrôlées par la composition du mélange gazeux, par exemple un mélange constitué en quantités plus ou moins importante d'air, d'azote (pour ralentir la réaction) d'oxygène (pour accélérer la réaction). Lorsque l'application est une activation, une réactivation, une réjuvénation des gaz réactifs spécifiques peuvent être utilisés, seuls ou en mélange, comme par exemple l'hydrogène, l'hydrogène sulfuré, l'ammoniac, des composés chlorés... A la sortie de l'enceinte, là où l'on soutire le premier solide (catalyseurs ou adsorbant) et le solide inerte, on peut séparer les deux solides par tamisage, récupérer d'une part le catalyseur ou le solide strippé ou le catalyseur , ou l'adsorbant régénéré ou réactivé ou activé ou réjuvéné et d'autre part le solide dit inerte. Avantageusement le solide inerte est recyclé au moins en partie dans l'enceinte de traitement du catalyseur ou de l'adsorbant. Cela permet notamment de conserver un niveau thermique adéquat.

Selon la présente invention, on notera qu'on peut traiter le catalyseur ou l'adsorbant dans une enceinte ou dans plusieurs enceintes en série, s'il s'avère qu'une seule enceinte n'est pas suffisante. Il est aussi possible de faire passer plusieurs fois le catalyseur ou l'adsorbant dans la même enceinte.

A l'intérieur de l'enceinte dans laquelle est réalisée la mise en contact du solide à traiter (catalyseur ou adsorbant) avec un gaz de fluidisation, et notamment dans le cas où cette enceinte est un four tournant, dans lequel on introduit les solides à une extrémité du four, il est avantageux de disposer dans l'enceinte ou dans le four des dispositifs internes, tels que chicanes ou "baffles", destinés à forcer la circulation du catalyseur ou de l'adsorbant depuis le point d'entrée dans l'enceinte jusqu'au point de sortie. Ces internes peuvent être à titre d'exemple une simple plaque métallique, ou (au moins) deux plaques disposées par exemple en croix, qui divisent ainsi l'enceinte ou le four (cylindrique par exemple), en 2 ou (au moins) 4 zones.

Le réglage de la température dans l'enceinte s'effectue de différentes façons : d'une part, la quantité d'énergie externe apportée au système par des résistances électnques, des brûleurs à gaz, des échangeurs ou tout autre moyen adapté ; d'autre part la quantité d'énergie soutirée au système par des systèmes de refroidissement, comme par exemple des échangeurs à tube ou à plaques traversés par un fluide de refroidissement comme de l'air, de la vapeur, de l'eau, de l'huile ; enfin la composition du gaz, le débit de solide à traiter et le débit de recyclage de solide inerte. Pour une régénération de catalyseur, on peut, par exemple, opérer à 500°C avec des solides qui mettent environ 1 heure ou 2 heures à parcourir l'enceinte. S'il s'agit d'une régénération, le gaz contenant de l'oxygène moléculaire est introduit en quantité suffisante pour obtenir le brûlage stoechiométrique des dépôts carbonés et soufrés, ou au moins un taux de brûlage de 50%.

L'essentiel dans la présente invention est d'avoir d'une part un débit de gaz suffisant pour assurer la fluidisation du premier solide et d'autre part un débit de gaz adéquat suffisant pour assumer au moins 50% de la combustion des dépôts carbonés et soufrés.

On peut utiliser une alumine comme solide inerte, comme par exemple une alumine électrofondue (par exemple de masse volumique 1700 kg/m^{3,} et de granulométrie inférieur à 500 microns, de préférence entre 20 et 300 microns, et plus particulièrement de granulométrie moyenne de 150 microns). Comme indiqué plus haut, ce peut être aussi du sable ou autres solides avec des granulométries de mêmes ordre de grandeur que pour l'alumine. On peut aussi utiliser un produit analogue au catalyseur utilisé dans les unités de raffinage pétrolier de craquage catalytique, ayant une granulométrie située vers par exemple 50-80 microns. On peut aussi utiliser des fines ou poussières obtenues lors de la manipulation, du traitement de divers produits et notamment des produits de même nature que ceux que l'on veut traiter à savoir des catalyseurs ou des adsorbants. La répartition granulométrique sera ajustée par les techniques connues de séparation de solides pulvérulents, comme le cyclonage ou le tamisage.

Les vitesses du gaz de fluidisation nécessaires dans le cadre de la présente invention sont bien inférieures aux vitesses normalement utilisées pour effectuer les fluidisations en l'absence d'un deuxième solide dit inerte. A titre d'exemple, il faut : une vitesse de linéaire de 1m/s (mètre par seconde) pour fluidiser des extrudés diamètre 1,6 mm dont la densité apparente est de 830 kg/m³ ; une vitesse de 1,5 à 1,8 m/s pour fluidiser des billes de diamètre 2,4 dont la densité apparente est de 680 kg/m³ ; une vitesse de 2,2 m/s pour fluidiser des billes d'alumine de diamètre 0,1 à 0,2 dont la densité apparente est de 1 200 kg/m³. Mais, si le catalyseur est dilué par une quantité équivalente d'alumine (solide inerte) de granulométrie moyenne 100-200 microns, la fluidisation peut être atteinte avec une vitesse linéaire de 0,2 m/s d'air.

En opérant selon le procédé de l'invention, les particules du catalyseur ou d'adsorbants restent bien dispersées sans flottage des particules ou sans particules descendantes ou plongeant au fond de l'enceinte. La taille des particules de catalyseur ou d'adsorbant est en général comprise entre 0.5 et 5 millimètres et plus fréquemment entre 0.8 et 3 mm. Le rapport pondéral de catalyseur ou adsorbant rapporté au solide inerte est compris entre 0,01 et 1, de préférence de 0,01 à 0,5 et de préférence de 0,1 à 0,3.

Comme indiqué plus haut, le gaz peut être de l'air plus ou moins dilué, en faisant varier la teneur en oxygène par ajout d'oxygène pur ou par ajout d'azote ou autre gaz inerte, ou par dilution avec au moins une partie des gaz de combustion.

Comme indiqué plus haut , le four peut être constitué de plusieurs zones, par exemple de type rectangulaire avec circulation forcée de zone à zone à travers une série de chicanes ou "baffles" disposées entre les entrées et les sorties des diverse zones. On peut utiliser non pas un seul four mais une série de fours reliés les uns aux autres avec des régulations indépendantes des températures et des débits de gaz qui peuvent différer d'une zone à l'autre des fours. Ces zones peuvent être disposées en série ou en parallèle.

La présente invention présente l'avantage sur les fours à Louvres ("rotolouvre") ou fours à bandes ("belt furnace") d'avoir un meilleur contrôle de température et d'obtenir des temps de séjour courts. En effet, mieux on peut évacuer les calories en maîtrisant la température du lit, plus rapidement on obtient un brûlage adéquat en augmentant la teneur en oxygène du mélange gazeux. La présence d'une masse importante de solide inerte permet également un bon contrôle des températures en évitant la formation de points chauds.

Un autre gros avantage de ce procédé selon l'intervention est de pouvoir traiter des mélanges de différents catalyseurs de granulométrie différentes, ce qui n'est pas possible dans un four à fluidisation directe, sans utilisation d'un solide inerte.

Le procédé selon l'intervention permet en outre de réduire les taux d'attrition, donc les formations de fines, d'avoir une meilleure homogénéisation des catalyseurs c'est à dire d'observer moins de mouvements erratiques de particules de catalyseurs.

### Les exemples suivants illustrent l'invention.

Dans le premier exemple, le catalyseur est régénéré de façon classique dans un laboratoire. Dans le deuxième exemple, le catalyseur est régénéré dans un four rotatif (rotolouvre) sans fluidisation réelle. Dans le troisième exemple, on utilise un four dans lequel une fluidisation du catalyseur est provoquée soit par de l'air, soit par de l'azote, mais ici sans solide inerte. Dans les quatrième et cinquième exemple, on opère conformément à l'invention : en continu dans l'exemple 4, en batch dans l'exemple 5.

### Exemple n°1 comparatif :

Un catalyseur d'hydrotraitement de coupes pétrolières, perd son activité au cours de son cycle industriel par limitation d'accès aux sites actifs due au dépôt de carbone. Cet empoisonnement est réversible si ce dépôt carboné peut être éliminé par combustion contrôlée. Dans cet exemple, on a sélectionné un catalyseur désactivé pour le soumettre à une opération de régénération effectuée au laboratoire dans des conditions parfaitement contrôlées, et préparer ainsi un solide régénéré qui peut servir de référence aux autres essais décrits par la suite.

Le catalyseur A, de type Cobalt/Molybdène sur support alumine, se présente sous forme d'extrudés de diamètre 1.2mm. Un échantillon de 10g de ce catalyseur usé (appelé A), titrant 10% poids de carbone et 8.7% de soufre, est introduit dans un réacteur en verre, lui même placé dans un four vertical. Un débit de 50 litres/heure de mélange azote/air 90/10 vol/vol traverse le lit de solide. La température, mesurée par un thermocouple placé au coeur du lit, est augmentée progressivement et laissée 2 heures à 300°C puis 4 heures à 480°C. Le mélange gazeux est ensuite remplacé par de l'air pur, l'expérience poursuivie 1 heure puis arrêtée. Le catalyseur ainsi régénéré est comparé au catalyseur neuf correspondant, au niveau de sa surface spécifique et de son activité catalytique en hydrodésulfuration de coupes pétrolières. Celle ci est mesurée dans un test pilote utilisant 50ml de catalyseur, à une pression de 30 bar, une température de 350°C, et un gaz oil de teneur en soufre 1.71 %poids passée à une vitesse volumique spatiale de 1 litre par litre de catalyseur et par heure.

| | Catalyseur neuf | Catalyseur A usé | Catalyseur régénéré laboratoire |
|---|---|---|---|
| Carbone (%poids) | - | 10.0 | 0.12 |
| Soufre(%poids) | - | 8.7 | 0.19 |
| Surface Spécifique (m²/g) | 220 | - | 203 |
| Longueur moyenne (mm) | 3.9 | | 3.2 |
| Activité HDS | 100 (base) | 21 | 95 |

### Exemple 2 comparatif :

Cet exemple, non conforme à l'invention, décrit une opération industrielle de régénération dans un four de type « rotolouvre ». Le catalyseur usé (catalyseur A) est introduit en continu à 300 Kg/h dans un four tournant incliné, muni de louvres. Le lit de solide circule sur les louvres au travers desquelles passe un flux d'air chaud d'environ 4000 Nm3/h. La vitesse de l'air traversant le lit est de 0.1 m/s et ne permet pas réellement une fluidisation du lit de catalyseur, mais provoque néanmoins, grâce notamment à la rotation du tube, une légère expansion du lit qui assure un échange gaz solide homogène. Le lit de catalyseur séjourne 4 heures pendant lesquelles se produisent les réactions exothermiques de combustion du carbone et l'oxydation des sulfures métalliques. Un flux d'air froid de 5000 Nm3/h est injecté dans le ciel du four de façon à enlever les calories produites. Le profil des températures au sein du lit de catalyseur est contrôlé par le double effet de l'apport d'air chaud au travers du lit de catalyseur et l'enlèvement des calories via l'air de refroidissement de façon à maintenir le niveau thermique à des valeurs proches de 500°C sur 80% de l'encours constitué. La régénération du catalyseur ainsi contrôlée permet de retrouver des performances satisfaisantes, avec toutefois un décalage par rapport au produit de référence.

| | Catalyseur usé | Catalyseur régénéré laboratoire selon l'exemple 1 | Catalyseur régénéré industriel |
|---|---|---|---|
| Carbone (%poids) | 10.0 | 0.12 | 0.28 |
| Soufre(%poids) | 8.7 | 0.19 | 0.42 |
| Surface Spécifique (m²/g) | - | 203 | 198 |
| Longueur moyenne (mm) | - | 3.2 | 3.0 |
| Activité HDS | 21 | 95 | 91 |

### Exemple 3 (non conforme à l'invention) :

Une quantité de 1 litre du catalyseur A est introduite dans un four de forme cylindrique de 20 cm de diamètre muni d'une sole en métal fritté permettant une injection de gaz répartie de façon homogène sur toute la surface disponible. Un débit d'air de 40 m3/h, préchauffé à 500°C, est injecté au travers de la sole, et fluidise le lit de catalyseur. La température du lit et de l'enceinte croît régulièrement après l'injection d'air chaud. Au delà d'environ 350°C, la température du lit s'élève brusquement et dépasse 650°C. Après arrêt de l'opération et refroidissement, le catalyseur est analysé. (Référence A3-1). Sa faible surface, 136 m²/g, due au frittage du support alumine, atteste de la destruction partielle du catalyseur et de l'échec de cette méthode de régénération. Ce débit d'air de 40 m3/h était nécessaire pour la fluidisation du lit, mais l'excès d'oxygène correspondant entraîne un emballement de la réaction et une surchauffe du catalyseur.
La même expérience est reconduite avec de l'azote en guise de gaz de fluidisation. Un dispositif permet d'injecter de l'air en proportion contrôlable. Le lit de catalyseur est fluidisé et chauffé par 40 m3/h d'azote jusqu'à 450°C température à laquelle la puissance de chauffe sur l'azote est maintenue constante. A cette température, de l'air est injecté sous la sole à un débit régulé en fonction de la température de lit et limité à 1 m3/h. La consigne de température de lit est graduellement augmentée à 500°C. Après 6 heures l'expérience est arrêtée et le catalyseur analysé (référence A 3-2). Il apparaît que la présence d'azote à la place de l'air, outre sa fonction de fluidisation du milieu a permis de contrôler la cinétique de la réaction et donc son exothermie, et ainsi produit un catalyseur aux propriétés intéressantes. En revanche, la technique est peu intéressante au plan économique à cause du coût de l'azote.

| | Catalyseur régénéré laboratoire | Catalyseur régénéré A 3-1 | Catalyseur régénéré A 3-2 |
|---|---|---|---|
| Carbone (%poids) | 0.12 | 0.12 | 0.29 |
| Soufre(%poids) | 0.19 | 0.10 | 0.28 |
| Surface Spécifique (m²/g) | 203 | 136 | 201 |
| Longueur moyenne (mm) | 3.2 | 2.4 | 2.8 |
| Activité HDS | 95 | - | 92 |

### Exemple 4 :

Des quantités de 1 litre de catalyseur A et de 6 litres d'alumine électrofondue (masse volumique de 1.7 g/ml, granulométrie moyenne 150 microns) sont introduits dans le four décrit à l'exemple 3. Un débit de 8 m3/h d'air, préchauffé à 500°C, fluidise et chauffe ce mélange d'alumine et de catalyseur. Lorsque la température du lit atteint 350°C, les réactions d'oxydation s'amorcent, provoquant une rapide augmentation de la température qui s'élève à 503°C puis redescend à 380°C, les calories apportées par l'air chaud étant insuffisantes pour compenser les pertes thermiques par les parois du four. Un échantillon du mélange homogène alumine catalyseur est alors prélevé, tamisé sur une grille d'interstices de 1 mm², puis analysé (référence A 4-1 partiellement régénéré). Il apparaît que l'élimination du carbone et du soufre n'est pas terminée, à cause d'un temps de séjour insuffisant à température élevée. L'expérience est poursuivie sous les mêmes conditions dynamiques, mais en apportant des calories par le biais d'une résistance électrique immergée dans le lit de solide fluidisé. La température du lit est régulée à 500°C pendant 1 heure puis l'expérience arrêtée, le solide tamisé et analysé (référence A 4-2).

| | Catalyseur régénéré laboratoire | Catalyseur partiellement régénéré A 4-1 | Catalyseur régénéré A 4-2 |
|---|---|---|---|
| Carbone (% poids) | 0.12 | 2.2 | 0.15 |
| Soufre (% poids) | 0.19 | 1.9 | 0.22 |
| Surface Spécifique (m²/g) | 203 | - | 207 |
| Longueur moyenne (mm) | 3.2 | | 3.0 |
| Activité HDS | 95 | - | 93 |

La longueur moyenne n'est pas sensiblement diminuée. Cette expérience montre que la fluidisation d'un lit mixte alumine / catalyseur s'effectue en mettant en oeuvre des débit gazeux environ 5 fois moins élevés que ceux qui sont nécessaires pour fluidiser un lit d'extrudés de diamètre 1.2mm. Elle montre aussi la faisabilité d'une opération de régénération en lit fluidisé, sans gaz inerte pour contrôler l'exothermie de la réaction de combustion, et où la température est limitée grâce au rôle de volant thermique joué par le solide de faible granulométrie.

### Exemple 5 :

Le four est rempli par 3 litres d'alumine électrofondue identique à celle de l'exemple précédent. L'air préchauffé est injecté à un débit de 8 m3/h et fluidise l'alumine. La puissance de chauffe est réglée de façon à obtenir une température stabilisée à 430°C. Une quantité de 50 grammes de catalyseur A est alors injectée dans le lit fluidisé d'alumine chaude. La température s'élève rapidement à 490°C, on injecte alors dans le milieu 0.2 litres d'alumine froide. La température décroît à 450 °C, en partie par effet du refroidissement due à la matière froide ajoutée. Environ 15 minutes plus tard, on introduit alors à nouveau 50 g de catalyseur. Après une montée à 510°C on injecte à nouveau 0.2 litres d'alumine, la température redescend au dessous de 450°C au bout de 15'. La séquence est reproduite ainsi 6 fois de suite, puis l'expérience arrêtée. Le solide est tamisé et analysé (référence A5).

| | Catalyseur régénéré laboratoire | Catalyseur régénéré A 5 |
|---|---|---|
| Carbone (% poids) | 0.12 | 0.15 |
| Soufre (% poids) | 0.19 | 0.23 |
| Surface Spécifique (m²/g) | 203 | 201 |
| Longueur moyenne (mm) | 3.2 | 2.9 |
| Activité HDS | 95 | 91 |

Cet exemple illustre la possibilité de régénérer le catalyseur de façon continue dans un four à lit de sable fluidisé, où le solide à régénérer serait introduit en un point du four et soutiré en un autre point, avec une circulation entre les points d'entrée et de sortie et un temps de résidence centré autour d'une heure environ.
Il montre par ailleurs la possibilité de contrôler la thermicité de la réaction par l'apport du deuxième solide pulvérulent.

## Revendications

1. Procédé de mise en contact dans une enceinte d'un premier solide pulvérulent choisi dans le groupe constitué par les catalyseurs et les adsorbants avec un deuxième solide pulvérulent et inerte de granulométrie différente, en présence d'au moins un gaz, avec mise en mouvement des solides, appliqué au stripage de catalyseurs ou d'adsorbants, ou régénération de catalyseurs et d'adsorbants, ou réactivation ou réjuvénation de catalyseurs ou d'adsorbants, procédé dans lequel la dimension des particules du solide inerte est au maximum égale à la moitié de la plus petite dimension du premier solide et le rapport pondéral entre le catalyseur ou adsorbant et le deuxième solide pulvérulent est compris entre 0,01et 0,5.

2. Procédé selon la revendication 1 de mise en contact de particules d'un catalyseur ou d'un adsorbant avec des particules d'un autre solide pulvérulent, la dite mise en contact étant effectuée dans une enceinte sous la forme d'un lit fluide au moyen d'un gaz de fluidisation, les particules du dit autre solide pulvérulent ayant une granulométrie différente de celle des particules du catalyseur ou de l'adsorbant.

3. Procédé selon l'une des revendications 1 et 2 dans lequel le gaz assure la fluidisation du premier solide et du deuxième solide.

4. Procédé selon la revendication 3 appliqué à la régénération d'un catalyseur ou d'un adsorbant dans lequel le gaz de fluidisation contient de l'oxygène moléculaire, et a aussi pour rôle d'assurer le brûlage des dépôts carbonés ou soufrés du catalyseurs à traiter.

5. Procédé selon l'une des revendications précédentes appliqué à l'activation, la réactivation, le traitement de catalyseurs ou d'adsorbant dans lequel le gaz de fluidisation est un mélange de composants dont certains peuvent réagir avec le catalyseur ou l'adsorbant.

6. Procédé selon l'une des revendications 1 à 5 dans lequel les 2 solides sont introduits ensemble ou séparément en un point de l'enceinte et en sont soutirés en un autre point, le gaz de fluidisation étant introduit en au moins un point sur le parcours des deux solides.

7. Procédé selon la revendication 6 dans lequel les solides sont admis dans l'enceinte progressivement, en continu ou périodiquement et, cheminent progressivement, périodiquement ou en continu, à travers l'enceinte.

8. Procédé selon l'une des revendications 1 à 7 dans lequel le solide inerte est choisi dans le groupe constitué par l'alumine, la silice, la magnésie et le sable ou leurs mélanges, les poussières ou fines de catalyseurs ou adsorbants.

9. Procédé selon l'une des revendications 1 à 8 dans lequel les gaz utilisés pour assurer la fluidisation ou le dit traitement sont choisis dans le groupe constitué par au moins l'air, l'air dilué, l'air enrichi en oxygène, les gaz inertes, les gaz contenant de l'oxygène, la vapeur d'eau et le dioxyde de carbone, l'hydrogène, le sulfure d'hydrogène ou des composés chlorés.

10. Procédé selon l'une des revendications 1 à 9 dans lequel à la sortie de l'enceinte les deux solides sont séparés l'un de l'autre par tamisage et dans lequel le solide inerte est recyclé au moins en partie dans la dite enceinte.

11. Procédé selon l'une des revendications 1 à 10, dans lequel on dispose dans l'enceinte, sur le parcours des solides des dispositifs internes tels que chicanes ou baffles.

12. Procédé selon l'une des revendications 1 à 11 dans lequel on utilise au moins deux enceintes en série ou en parallèle

## Patentansprüche

1. Verfahren zum Kontaktieren, in einem Innenraum, von einem ersten pulverförmigen Festkörper, gewählt aus der Gruppe, die besteht aus den Katalysatoren, und den Adsorptionsmitteln mit einem zweiten pulverförmigen und inerten Festkörper unterschiedlicher Granulometrie in Gegenwart wenigstens eines Gases, mit Bewegen der Festkörper, angewandt auf das Abstreifen von Katalysatoren oder Adsorptionsmitteln oder die Regeneration von Katalysatoren und Adsorptionsmitteln oder Reaktivierung oder Verjüngung von Katalysatoren oder Adsorptionsmitteln, in welchem Verfahren die Dimension der Partikel des Inertfestkörpers maximal die Hälfte der kleinsten Dimension des ersten Festkörpers ist und das Gewichtsverhältnis zwischen dem Katalysator oder Adsorptionsmittel und dem zweiten pulverförmigen Festkörper zwischen 0,01 und 0,5 liegt.

2. Verfahren nach Anspruch 1 zum Kontaktieren von Partikeln eines Katalysators oder eines Adsorptionsmittels mit Partikeln eines anderen pulverförmigen Festkörpers, wobei das Kontaktieren in wenigstens einem Innenraum in Form eines Fluidbettes mittels eines Fluidisierungsgases durchgeführt wird, wobei die Partikel des anderen pulverförmigen Körpers eine unterschiedliche Granulometrie von jener der Partikel des Katalysators oder des Adsorptionsmittels haben.

3. Verfahren nach einem der Ansprüche 1 und 2, in welchem das Gas die Fluidisierung des ersten Festkörpers und des zweiten Festkörpers sicherstellt.

4. Verfahren nach Anspruch 3, angewandt auf die Regenerierung eines Katalysators oder eines Adsorptionsmittels, in welchem das Fluidisierungsgas molekularen Sauerstoff enthält und es auch zur Aufgabe hat, das Verbrennen der Kohle- oder Schwefelablagerungen auf dem zu behandelnden Katalysator sicherzustellen.

5. Verfahren nach einem der vorhergehenden Ansprüche, angewandt auf die Aktivierung, die Reaktivierung, die Behandlung von Katalysatoren oder Adsorptionsmittel, in welchem das Fluidisierungsgas ein Gemisch von Bestandteilen ist, unter denen bestimmte mit dem Katalysator oder dem Adsorptionsmittel reagieren können.

6. Verfahren nach einem der Ansprüche 1 bis 5, in welchem die 2 Festkörper zusammen oder getrennt an einem Punkt des Innenraumes eingeführt werden und davon an einem anderen Punkt abgezogen werden, wobei das Fluidisierungsgas an wenigstens einem Punkt auf dem Umlauf der beiden Festkörper eingeführt wird.

7. Verfahren nach Anspruch 6, bei dem die Festkörper in den Innenraum fortschreitend kontinuierlich oder periodisch eingelassen werden und fortschreitend periodisch oder kontinuierlich entlang des Innenraumes wandern.

8. Verfahren nach einem der Ansprüche 1 bis 7, bei dem der Inertfestkörper gewählt wird aus der Gruppe, die besteht aus Aluminiumoxid, Siliziumoxid, Magnesiumoxid und Sand oder deren Gemischen, den Stäuben oder Feinstäuben von Katalysatoren oder Adsorptionsmitteln.

9. Verfahren nach einem der Ansprüche 1 bis 8, bei dem die zum Sicherstellen der Fluidisierung oder der genannten Behandlung verwendeten Gase aus der Gruppe gewählt werden, die besteht aus wenigstens Luft, verdünnter Luft, mit Sauerstoff angereicherter Luft, den Inertgasen, den sauerstoffhaltigen Gasen, Wasserdampf und Kohlendioxid, Wasserstoff, Schwefelwasserstoff oder chlorhaltigen Verbindungen.

10. Verfahren nach einem der Ansprüche 1 bis 9, bei dem am Ausgang des Innenraums die beiden Festkörper voneinander durch Aussieben getrennt werden und in dem der Inertfestkörper wenigstens teilweise in den Innenraum rezykliert wird.

11. Verfahren nach einem der Ansprüche 1 bis 10, bei dem man in dem Innenraum auf dem Umlauf der Festkörper über interne Vorrichtungen wie Schikanen oder Strömungsstörer verfügt.

12. Verfahren nach einem der Ansprüche 1 bis 11, bei dem man wenigstens zwei Innenräume in Reihe oder parallel verwendet.

## Claims

1. A process for bringing, in a vessel, a first pulverulent solid selected from the group formed by catalysts and adsorbents into contact with a second pulverulent and inert solid with a different granulometry, in the presence of at least one gas, said solids being caused to move, applied to stripping catalysts or adsorbents, or regenerating catalysts or adsorbents, or activation or reactivation or rejuvenation of catalysts or adsorbents, process in which the dimensions of the inert solid particles is a maximum of half of the smallest dimension of the first solid, and the weight ratio between the catalyst or adsorbent and the second pulverulent solid is in the range 0.01 to 0.5.

2. A process according to claim 1 for bringing particles of a catalyst or an adsorbent into contact with particles of another pulverulent solid, said contact being effected in a vessel in the form of a fluid bed using a fluidisation gas, the particles of said other pulverulent solid having a granulometry different from that of the particles of catalyst or adsorbent.

3. A process according to claim 1 or claim 2, in which the gas ensures fluidisation of the first solid and of the second solid.

4. A process according to claim 3, applied to regeneration of a catalyst or an adsorbent in which the fluidisation gas contains molecular oxygen, and also acts to burn carbon-containing or sulphur-containing deposits from the catalysts to be treated.

5. A process according to any one of the preceding claims, applied to activation, reactivation or treatment of catalysts or adsorbents in which the fluidisation gas is a mixture of components some of which can react with the catalyst or adsorbent.

6. A process according to any one of claims 1 to 5 in which the two solids are introduced together or separately at one point of the vessel and are removed from another point, the fluidisation gas being introduced at at least one point over the path of the two solids.

7. A process according to claim 6, in which the solids are gradually admitted into the vessel, continuously or periodically and gradually progress through the vessel, periodically or continuously.

8. A process according to any one of claims 1 to 7, in which the inert solid is selected from the group formed by alumina, silica, magnesia and sand or mixtures thereof, dust or fines of catalysts or adsorbents.

9. A process according to any one of claims 1 to 8, in which the gases used to ensure fluidisation or said treatment are selected from the group formed by at least air, diluted air, air enriched with oxygen, inert gases, gases containing oxygen, steam and carbon dioxide, hydrogen, hydrogen sulphide or chlorine-containing compounds.

10. A process according to any one of claims 1 to 9, in which the two solids are separated from each other at the outlet from the vessel by screening and in which at least part of the inert solid is recycled to said vessel.

11. A process according to any one of claims 1 to 10, in which internal means such as baffles are disposed in the vessel in the path of the solids.

12. A process according to any one of claims 1 to 11, in which at least two vessels are used in series or in parallel.
